# EUROPEAN PATENT APPLICATION

(11) **EP 2 615 526 A1**
(43) Date of publication of application: **17.07.2013**
(21) Application number: 11823330.3
(22) Date of filing: 13.07.2011
(51) Int. Cl.: G06F 3/033, G06F 3/038, G06F 3/042, G09F 9/00

(54) **DISPLAY SYSTEM AND DETECTION METHOD**

(30) Priority: 06.09.2010 JP 2010199063
(71) Applicant: Sharp Kabushiki Kaisha, Osaka-shi, Osaka 545-8522 (JP)
(72) Inventor: KAWAI, Michihiro, Osaka-shi, Osaka 545-8522 (JP); YAMAMOTO, Keiichi, Osaka-shi, Osaka 545-8522 (JP)
(74) Representative: Müller - Hoffmann & Partner
(86) International application number: PCT/JP2011/065965
(87) International publication number: WO 2012/032851

(57) **Abstract**

A display system (1) displays objects (D to F) in a display region (810) in a manner arranged in a predetermined orientation. One light-emitting element of a sensor array (30) emits light to the obj ects (D to F) in the predetermined orientation. The display system (1) prestores data which associates numerical value ranges different from each other with the objects (D to F), respectively. When light reflected by a finger (910) is received by light-receiving elements of the sensor array (30), the display system (1) calculates the number of the light-receiving elements that have received the reflected light, identifies one object associated with the numerical value range including the calculated number of the light-receiving elements, from among the objects (D to F), based on the calculated number of the light-receiving elements and the stored data, and performs processing corresponding to the identified object.

## Description

### TECHNICAL FIELD

The present invention relates to a display system and a detection method. In particular, the present invention relates to a display system displaying a two-dimensional image in midair, and a detection method detecting selection of an object included in the two-dimensional image.

### BACKGROUND ART

Conventionally, display systems displaying a two-dimensional image in midair have been known.

Japanese Patent Laying-Open No. 2005-141102 (Patent Literature 1) discloses a stereoscopic two-dimensional image display device as the display system described above. The stereoscopic two-dimensional image display device includes a display unit, a microlens array, a position detection sensor, and a control unit.

The display unit includes an image display surface displaying a two-dimensional image. The microlens array images light emitted from the image display surface on a stereoscopic image display surface separated from the image display surface, and thereby displays the two-dimensional image on the stereoscopic image display surface in a pseudo-stereoscopic manner. The position detection sensor is disposed to correspond to the stereoscopic image display surface to output a signal corresponding to a position that has received a physical action from outside. The control unit changes the image within the stereoscopic image display surface in accordance with the output signal from the position detection sensor.

Japanese Patent Laying-Open No. 9-55152 (Patent Literature 2) discloses a display device including a touchless panel switch as the display system described above. In the touchless panel switch, in order to cause a light beam from a light-projecting element to be reflected by a finger when it enters a predetermined region for detecting a finger, and to be incident on a light-receiving element, at least one reflective photosensor including the light-projecting element and the light-receiving element is placed for each predetermined region, in a space around a refractive index distribution type lens element.

Further, conventionally, display systems displaying a two-dimensional image and a three-dimensional image in midair have been known.

International Publication No. 2007/116639 (Patent Literature 3) discloses a display device including an imaging element as the display system described above. The display device images a body to be projected, which is a two-dimensional or three-dimensional body, on a side opposite to the imaging element, as a real image of a two-dimensional image or a three-dimensional image. A more detailed description will be given below.

The imaging element is an optical element which bends a light beam when light passes through an element surface constituting one plane. The imaging element is constituted by disposing a plurality of unit optical elements which reflect light at one or more mirror surfaces disposed perpendicular to or at an angle substantially perpendicular to the element surface. The imaging element causes light emitted from the body to be projected disposed on one side of the element surface to be reflected at the mirror surface when it passes through the element surface, and thereby images the light as a real image in a space having no physical entity on the other side of the element surface.

Further, conventionally, non-contact switches using a hologram have been known.

Japanese Patent Laying-Open No. 10-302589 (Patent Literature 4) discloses a non-contact switch including a half mirror placed behind a hologram lens, an original image (original picture) placed behind the half mirror, and a back light placed behind the original image. In the non-contact switch, a light-emitting element is placed on one side of the front surface side of the hologram lens, and a first light-receiving element is placed on the other side thereof. The non-contact switch further includes a second light-receiving element for receiving reflected light passing through the hologram lens and then reflected by the half mirror, of light reflected by a body.

### CITATION LIST

### PATENT LITERATURE

PTL 1: Japanese Patent Laying-Open No. 2005-141102
PTL 2 : Japanese Patent Laying-Open No. 9-55152
PTL 3 : International Publication No. 2007/116639
PTL 4 : Japanese Patent Laying-Open No. 10-302589

### SUMMARY OF INVENTION

### TECHNICAL PROBLEM

However, in Patent Literature 1, it is necessary to dispose the position detection sensor to surround the periphery of the two-dimensional image displayed in midair. Thus, in Patent Literature 1, a frame is required on the periphery of the two-dimensional image displayed in midair. Therefore, a user is less likely to feel a difference between the image displayed by the stereoscopic two-dimensional image display device of Patent Literature 1 and an image displayed by a typical display which causes an image to be displayed on a display panel.

In Patent Literature 2, one sensor senses that a body such as a finger is located at a predetermined position within a two-dimensional image in midair. Thus, a multitude of sensors are required to perform sensing for a display region displaying the two-dimensional image. Further, it is very difficult to determine the position for placing each sensor.

In Patent Literature 3, it is impossible to sense where in the imaged real image of the two-dimensional image or the three-dimensional image the body exists.

In Patent Literature 4, it is impossible to dispose a plurality of selectable objects in a manner arranged in an orientation from the hologram lens to a formed image.

The present invention has been made in view of the aforementioned problems, and one objective of the present invention is to provide a display system capable of detecting selection of an object in a two-dimensional image displayed in midair with a simple configuration, without surrounding the periphery of the two-dimensional image with a frame, and a detection method in the display system.

### SOLUTION TO PROBLEM

According to one aspect of the present invention, a display system includes: a display; an optical element displaying a two-dimensional image in a midair display region based on an image displayed on the display; a sensor including a light-emitting element and a plurality of light-receiving elements; a processor electrically connected to the sensor and causing a plurality of objects to be displayed in the display region in a manner arranged in a predetermined orientation; and a memory electrically connected to the processor. The light-emitting element emits light to the plurality of objects in the predetermined orientation. The plurality of light-receiving elements are disposed to be capable of receiving light reflected by a body, of the emitted light. The memory prestores first data which associates numerical value ranges different from each other with the plurality of objects, respectively. The processor is configured to calculate, when the reflected light is received by the sensor, the number of the light-receiving elements that have received the reflected light. The processor is configured to identify one object associated with the numerical value range including the calculated number of the light-receiving elements, from among the plurality of objects, based on the calculated number of the light-receiving elements and the first data. The processor is configured to perform processing corresponding to the identified object.

Preferably, the plurality of light-receiving elements are disposed adjacent to the light-emitting element. The processor determines whether or not the number of light-receiving regions in the sensor formed by the reflected light is one, based on reception of the reflected light by the sensor. When the processor determines that the number of the light-receiving regions is one, the processor performs identification of the object. When the processor determines that the number of the light-receiving regions is not one, the processor does not perform identification of the object.

Preferably, the plurality of light-receiving elements are disposed to surround the light-emitting element.

Preferably, the plurality of light-receiving elements are disposed in a matrix. The light-receiving region has a shape of a circle or an ellipse. The memory further stores second data which associates numerical values different from each other with the plurality of objects, respectively. The numerical values are set to increase in proportion to a distance between the object and the sensor. The processor is configured to compare, when the light-receiving region has the shape of an ellipse, the number of the light-receiving elements located on a long axis of the ellipse, of the light-receiving elements that have received the reflected light, with the numerical value associated with the identified object. The processor is configured to perform the processing corresponding to the identified object when the number of the light-receiving elements is less than a predetermined multiple of the numerical value. The processor is configured not to perform the processing corresponding to the identified object when the number of the light-receiving elements is not less than the predetermined multiple of the numerical value.

Preferably, when the processor determines that the number of the light-receiving elements located on the long axis is not less than the predetermined multiple of the numerical value, the processor changes a display mode for the identified object from a first display mode to a second display mode.

Preferably, when the processor determines that the number of the light-receiving regions is one, the processor determines whether or not the light-receiving region is included in a predetermined region. When the processor determines that the light-receiving region is included in the predetermined region, the processor performs the processing corresponding to the identified object. When the processor determines that the light-receiving region is not included in the predetermined region, the processor does not perform the processing corresponding to the identified object.

Preferably, the predetermined region is set for each object. The predetermined region is set to increase in proportion to a distance between the object and the sensor.

Preferably, when the processor determines that the light-receiving region is not included in the predetermined region, the processor changes a display mode for the identified object from a first display mode to a second display mode.

Preferably, the sensor is a distance-measuring sensor. The memory further stores third data indicating correspondence relation between an output voltage and a distance in the sensor, and fourth data indicating respective display positions of the plurality of objects. The processor is configured to detect a position of the body based on a voltage value output by the distance-measuring sensor and the third data. The processor is configured to determine whether or not the identification of the identified object is correct based on the detected position of the body and the fourth data. The processor is configured to perform the processing corresponding to the identified object when the processor determines that the identification is correct.

According to another aspect of the present invention, a detection method is a detection method in a display system detecting selection of an object included in a two-dimensional image displayed in a midair display region. The display system includes a display, an optical element displaying the two-dimensional image based on an image displayed on the display, a sensor including a light-emitting element and a plurality of light-receiving elements, a processor electrically connected to the sensor and causing a plurality of objects to be displayed on the display in a manner arranged in a predetermined orientation, and a memory electrically connected to the processor. The memory prestores data which associates numerical value ranges different from each other with the plurality of objects, respectively. The detection method includes the steps of: the light-emitting element emitting light to the plurality of objects in the predetermined orientation; at least one of the plurality of light-receiving elements receiving light reflected by a body, of the emitted light; the processor calculating, when the reflected light is received by the sensor, the number of the light-receiving elements that have received the reflected light; the processor identifying one object associated with the numerical value range including the calculated number of the light-receiving elements, from among the plurality of objects; and the processor performing processing corresponding to the identified object.

### ADVANTAGEOUS EFFECTS OF INVENTION

According to the present invention, selection of an obj ect in a two-dimensional image displayed in midair can be detected with a simple configuration, without surrounding the periphery of the two-dimensional image with a frame.

### BRIEF DESCRIPTION OF DRAWINGS

Fig. 1 is a view showing an appearance and a usage state of a display system.
Fig. 2 is a cross sectional view taken along a line II-II in Fig. 1 and seen in the direction of arrows.
Fig. 3 is a block diagram showing a portion of a hardware configuration of the display system.
Fig. 4 is a view for illustrating a configuration of a sensor array.
Fig. 5 is a view showing a state where a reflective member is disposed above a light-emitting element and light-receiving elements around the light-emitting element such that a bottom surface of the reflective member is parallel to a light-receiving surface of the sensor array.
Fig. 6 is a view for illustrating the relation between a light-receiving region and a distance between the bottom surface of the reflective member and the light-receiving surface.
Fig. 7 is a view showing light-receiving regions in a state where the reflective member is located at a position where the reflective member can reflect only a portion of light emitted by the light-emitting element.
Fig. 8 is a view showing a first example in which it is determined that a user operation has been fixed.
Fig. 9 is a view showing a second example in which it is determined that a user operation has been fixed.
Fig. 10 is a view showing an example in which it is determined that a user operation has not been fixed.
Fig. 11 is a view for illustrating a light-receiving region formed when the reflective member is inclined at an angle of φa.
Fig. 12 is a view for illustrating a light-receiving region formed when the reflective member is inclined at an angle of φb.
Fig. 13 is a view showing an example in which selection of object B is determined as valid by a CPU.
Fig. 14 is a view showing an example in which selection of object B is determined as invalid by the CPU.
Fig. 15 is a view showing an example in which selection of object B is determined as invalid by the CPU.
Fig. 16 is a view showing an example in which selection of object B is determined as valid by the CPU.
Fig. 17 is a view showing an example in which selection of object B is determined as invalid by the CPU.
Fig. 18 is a view showing an example in which selection of object B is determined as invalid by the CPU.
Fig. 19 is a flowchart showing a flow of processing in the display system.
Fig. 20 is a view showing characteristics of distance-measuring sensors.
Fig. 21 is a top view of another sensor array capable of being used for the display system.
Fig. 22 is a view showing one example of a detection element having only one light-emitting element.
Fig. 23 is a view showing a configuration of numerical value range data prestored in a memory.

### DESCRIPTION OF EMBODIMENTS

Hereinafter, embodiments of the present invention will be described with reference to the drawings. In the description below, identical parts will be designated by the same reference numerals. Since their names and functions are also the same, the detailed description thereof will not be repeated.

It is noted that, hereinafter, a "direction" refers to two orientations different from each other. The "two orientations different from each other" refer to, for example, two orientations oriented opposite to each other. As an example, an X axis direction refers to a positive orientation and a negative orientation of the X axis.

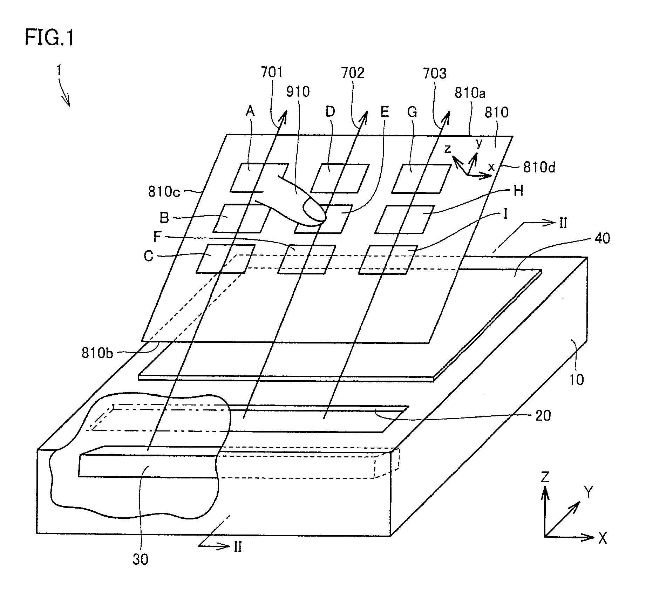

Fig. 1 is a view showing an appearance and a usage state of a display system 1. Referring to Fig. 1, display system 1 includes a casing 10, an opening 20, a sensor array 30, and an optical element 40.

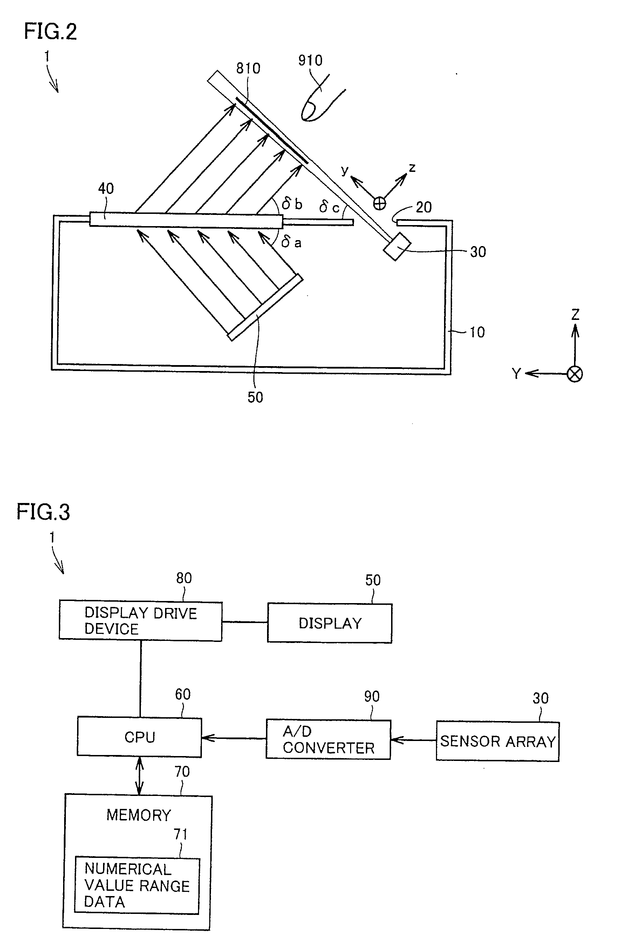

Optical element 40 allows light emitted by a display (see Fig. 2) within casing 10 to pass therethrough, and displays a two-dimensional image (midair image) in a midair rectangular display region 810. Optical element 40 is disposed parallel to an XY plane. As optical element 40, for example, the imaging element of Patent Literature 3 described as a background technique can be used.

Display region 810 is a region surrounded by four sides 810a, 810b, 810c, and 810d. Side 810a is parallel to side 810b, and side 810c is parallel to side 810d. Display region 810 has a normal in a z direction in an xyz coordinate system. Further, display region 810 is parallel to an xy plane.

It is noted that an x direction in the xyz coordinate system is parallel to an X direction in an XYZ coordinate system. The xyz coordinate system is a coordinate system obtained by rotating the XYZ coordinate system about the X axis through a predetermined angle.

Opening 20 has a rectangular shape. Opening 20 is formed below display region 810 (i.e., in a negative orientation in a y direction), along side 810b of display region 810.

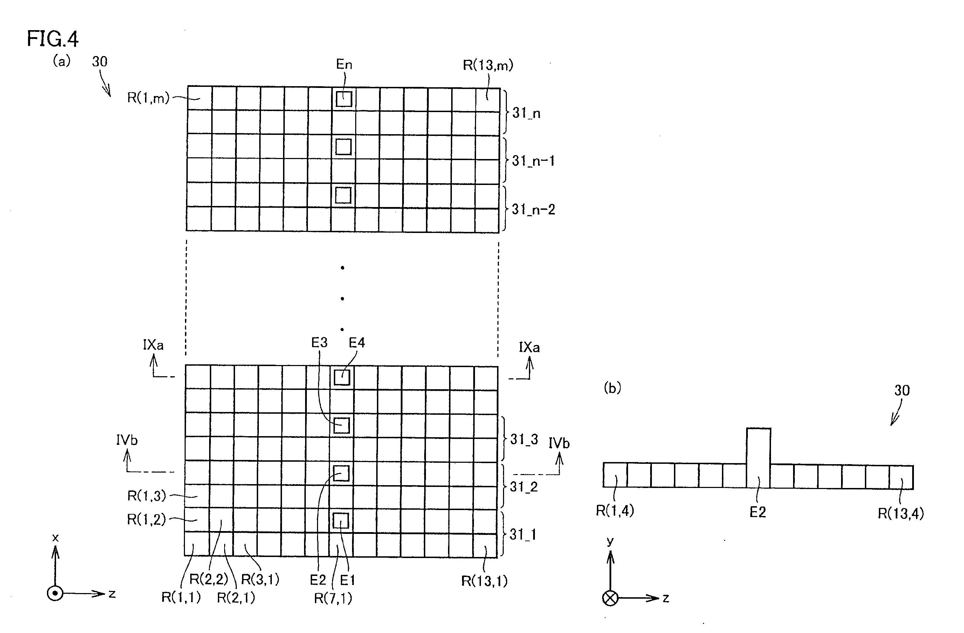

Sensor array 30 includes a plurality of distance-measuring sensors 31_k (see Fig. 4) disposed in a row in the x direction. Sensor array 30 is disposed within casing 10 along opening 20. Specifically, sensor array 30 is placed such that sensing surfaces of the distance-measuring sensors are oriented to display region 810.

In display region 810, a plurality of objects are displayed in a manner arranged in a predetermined orientation. For example, objects C, B, and A are displayed in display region 810 in a manner arranged in a positive orientation in the y direction in this order. Further, objects F, E, and D are displayed in display region 810 in a manner arranged in the positive orientation in the y direction in this order. Furthermore, objects I, H, and G are displayed in display region 810 in a manner arranged in the positive orientation in the y direction in this order. That is, objects C, B, and A have the same x coordinate value, objects F, E, and D have the same x coordinate value, and objects I, H, and G have the same x coordinate value. Further, objects A, E, and G have the same y coordinate value, objects B, E, and H have the same y coordinate value, and objects C, F, and I have the same y coordinate value.

In display system 1, a user touches a midair image displayed in display region 810, for example with his or her finger 910. Specifically, the user touches one of objects A to I included in the midair image with finger 910 to select the object. It is noted that the "objects" refer to items listed as operation targets for the user. The "objects" are, for example, icons configured to be selectable. Examples of an icon include an image indicating a file, an image indicating a shortcut, and an image for running an application.

Fig. 2 is a cross sectional view taken along a line II-II in Fig. 1 and seen in the direction of arrows. Referring to Fig. 2, display system 1 includes sensor array 30 and a display 50 within casing 10. Display system 1 includes optical element 40 in an opening provided in a surface of casing 10.

Display 50 displays an image in a direction toward optical element 40. The image displayed by display 50 is displayed in display region 810 by optical element 40 as a midair image. A more detailed description will be given below.

Display 50 is placed with being inclined at an angle of 90°-δa relative to optical element 40. It is noted that light emitted by display 50 is incident on optical element 40 also at an angle of 90°-δa. Optical element 40 emits the light emitted by display 50 at an angle of 90°-δb. Thereby, the image displayed by display 50 is displayed in display region 810 as a midair image.

Sensor array 30 is disposed at a position intersecting with a plane including display region 810. That is, sensor array 30 is disposed at a position parallel to sides 810a, 810b of display region 810 (see Fig. 1). Each of the distance-measuring sensors constituting sensor array 30 emits light in an orientation toward display region 810 in the y direction, which is perpendicular to a direction in which the distance-measuring sensors are aligned (i.e., x direction) and a direction of the normal of display region 810 (i.e., z direction) (see arrows 701, 702, and 703 in Fig. 1).

It is noted that an angle δc formed between a light path of light emitted by sensor array 30 and optical element 40 (i.e., an angle formed between display region 810 and optical element 40) and δb satisfy the relation of δc=90°-δb.

Sensor array 30 may be disposed such that the light emitted by each of the distance-measuring sensors passes through display region 810 (i.e., the light overlaps with display region 810), or disposed such that the light travels along display region 810 (i.e., the light travels through a region extending from display region 810 in the direction of the normal of display region 810 by a predetermined distance (for example, 1 cm), without overlapping with display region 810). Hereinafter, a description will be given of an exemplary case where the light emitted by each of the distance-measuring sensors passes through display region 810.

Fig. 3 is a block diagram showing a portion of a hardware configuration of display system 1. Referring to Fig. 3, display system 1 includes sensor array 30, display 50, a CPU (Central Processing Unit) 60, a memory 70, a display drive device 80, and an A/D (Analog/Digital) converter 90.

Sensor array 30 outputs an analog voltage value as a sensing result to A/D converter 90. A/D converter 90 converts the analog voltage value into a digital voltage value. A/D converter 90 sends the converted digital voltage value to CPU 60.

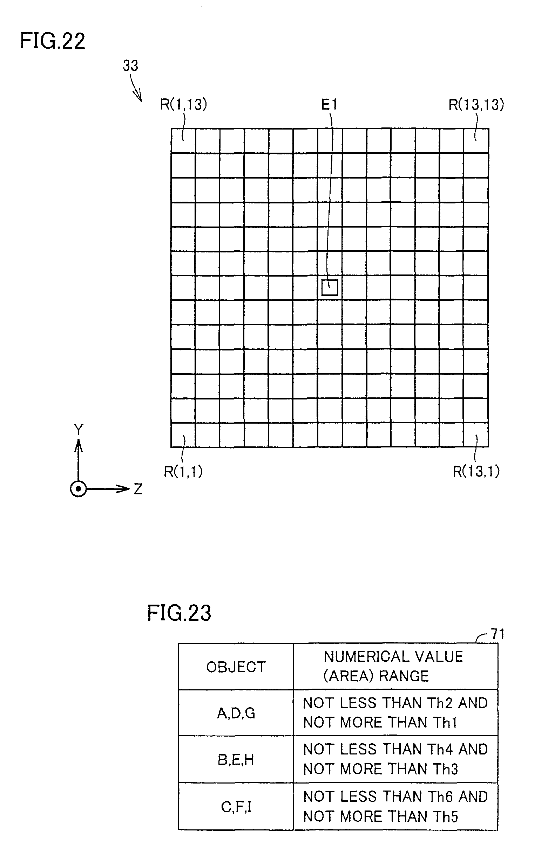

Memory 70 includes, for example, a ROM, a RAM, and a flash memory. Memory 70 stores various data such as programs to be executed by display system 1, data indicating display positions of the plurality of objects A to I, and numerical value range data 71. The numerical value range data will be described later (see Fig. 23).

CPU 60 executes a program prestored in memory 70. Further, CPU 60 performs processing described later, with reference to the voltage value obtained from A/D converter 90, numerical value range data 71, and the like.

Display drive device 80 receives a command from CPU 60 and drives display 50.

Fig. 4 is a view for illustrating a configuration of sensor array 30. Fig. 4(a) is a top view of sensor array 30. Fig. 4(b) is a cross sectional view taken along a line IVb-IVb in Fig. 4(a) and seen in the direction of arrows.

Referring to Fig. 4(a), sensor array 30 includes a plurality of distance-measuring sensors 31_1 to 31_n, where n is a natural number equal to or greater than 2. The plurality of distance-measuring sensors each have the same configuration. Each distance-measuring sensor 31_k (k is any number from 1 to n inclusive) includes one light-emitting element and a plurality of light-receiving elements. For example, distance-measuring sensor 31_1 includes one light-emitting element E1 and 25 light-receiving elements R(1,1) to R(13,1), R(1,2) to R(6,2), and R(8,2) to R(13,2). It is noted that the number of the light-receiving elements is not limited to 25. In addition, the number of the light-receiving elements in the z direction is not limited to 13.

Light-emitting element Ek emits light. Light-receiving elements R(i,j) are disposed to be capable of receiving light reflected by a body (for example, finger 910), of the light emitted by light-emitting element Ek, where k is a natural number from 1 to n inclusive, i is a natural number from 1 to 13 inclusive, j is a natural number from 1 to m inclusive, m and n satisfy the relation of m=2xn, and j is not an even value when i=7.

When attention is focused on one distance-measuring sensor 31_k, the plurality of light-receiving elements R(i,j) included in the sensor are disposed adjacent to light-emitting element Ek included in the sensor. When attention is focused on two distance-measuring sensors, the plurality of light-receiving elements included in the both sensors are disposed to surround the light-emitting element included in one of the distance-measuring sensors. For example, light-emitting element E2 is surrounded by the light-receiving elements of distance-measuring sensor 31_2 and the light-receiving elements of distance-measuring sensor 31_3.

Referring to Fig. 4(a) and Fig. 4(b), sensor array 30 is configured such that the light emitted by light-emitting element Ek is not incident on light-receiving elements R(i,j).

At least one of the plurality of distance-measuring sensors emits light to objects A to C in the positive orientation in the y direction (i.e., the predetermined orientation). Further, at least one of the distance-measuring sensors of sensor array 30 emits light to objects D to F in the positive orientation in the y direction. Furthermore, at least one of the distance-measuring sensors of sensor array 30 emits light to objects G to I in the positive orientation in the y direction.

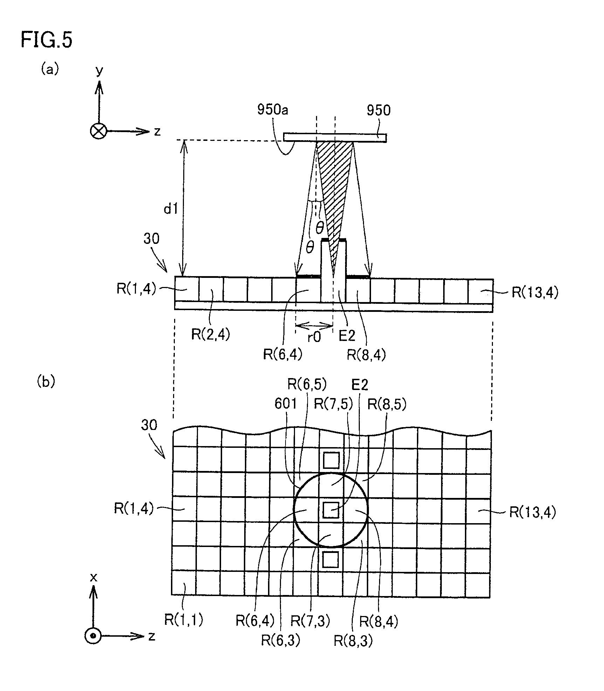

Hereinafter, for convenience of description, it is assumed that light-emitting element E2 emits light to objects A to C in the positive orientation in the y direction, and light-emitting element E4 emits light to objects D to F in the positive orientation in the y direction. In addition, for convenience of description, a description will be hereinafter given of an exemplary case where objects A to I are touched (i.e., selected) with a rectangular parallelepiped reflective member 950 (see Fig. 5) as a body, instead of finger 910 as a body. It is noted that, since a midair image is not a physical body, even when a two-dimensional image is touched, there is no physical contact with the two-dimensional image.

### <When Body is Parallel to Light-Receiving Surface>

Fig. 5 is a view showing a state where reflective member 950 is disposed above light-emitting element E2 and the light-receiving elements around light-emitting element E2 (i.e., in the positive orientation in the y direction) such that a bottom surface 950a (reflective surface) of reflective member 950 is parallel to a light-receiving surface of sensor array 30. Fig. 5(a) is a cross sectional view taken along line IVb-IVb in Fig. 4(a) and seen in the direction of arrows in a case where reflective member 950 is disposed in this state. Fig. 5(b) is a top view of sensor array 30 in the case where reflective member 950 is disposed in this state.

Referring to Fig. 5(a), the light emitted from light-emitting element E2 is reflected from bottom surface 950a of reflective member 950. Referring to Fig. 5(b), the reflected light forms a circular light-receiving region 601 on the light-receiving surface of sensor array 30. Thus, the light reflected by reflective member 950 is received by seven light-receiving elements R(6,3), R(7,3), R(8,3), R(6,4), R(8,4), R(6,5), R(7,5), and R(8,5).

It is noted that light-receiving region 601 has a radius of r0. In addition, when a distance between bottom surface 950a of reflective member 950 and the light-receiving surface is defined as d1, the relation of tanθ=r0/d1 is satisfied.

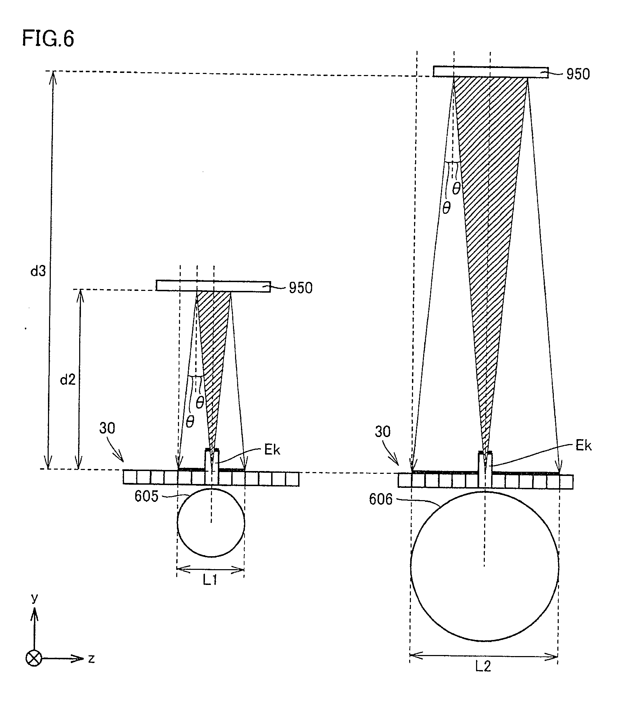

Fig. 6 is a view for illustrating the relation between the light-receiving region and the distance between bottom surface 950a of reflective member 950 and the light-receiving surface. Referring to Fig. 6, the light-receiving region has an area increased with an increase in the distance between reflective member 950 and the light-receiving surface. A light-receiving region 606 formed when the distance between the body and the light-receiving surface is d3 has an area larger than that of a light-receiving region 605 formed when such a distance is d2 (d3>d2). It is noted that d2, L1, and 8 satisfy the relation of tanθ=L1/2d2, and d3,L2, and θ satisfy the relation of tanθ=L2/2d2, where L1 is a diameter of light-receiving region 605, and L2 is a diameter of light-receiving region 606. For example, when d3=2xd2, it results in L2=2×L1.

Thus, the light-receiving region formed on the light-receiving surface has an area (size) increased with an increase in the distance between the light-receiving surface and reflective member 950. That is, the number of the light-receiving elements receiving the reflected light is increased with an increase in the distance between the light-receiving surface and reflective member 950. Using this principle, display system 1 determines which of the plurality of objects has been selected by the user. Hereinafter, the determination will be specifically described.

Fig. 23 is a view showing a configuration of numerical value range data 71 prestored in memory 70. Referring to Fig. 23, in numerical value range data 71, objects A to I are associated with numerical value (area) ranges, respectively. More specifically, numerical value range data 71 associates numerical value ranges different from each other with the plurality of objects, respectively. Preferably, numerical value range data 71 associates numerical value ranges not overlapping with each other with the plurality of objects, respectively. That is, in numerical value range data 71, objects A to I are associated beforehand with numerical value ranges, respectively, such that, when the user selects an object in display region 810 with reflective member 950 or finger 910, CPU 60 identifies the selected object, where Th1>Th2>Th3>Th4>Th5>Th6. It is noted that the format of numerical value range data 71 shown in Fig. 23 is merely an example, and the format thereof is not limited to the one shown in Fig. 23.

When the reflected light is received by light-receiving elements R(i,j) of at least distance-measuring sensor 31_2 and distance-measuring sensor 31_3, CPU 60 calculates the number of the light-receiving elements that have received the reflected light. The "number of the light-receiving elements that have received the reflected light" refers to the number of the light-receiving elements that have received light with an intensity of not less than a predetermined value. For example, in the case of Fig. 5, CPU 60 determines that seven light-receiving elements R(6,3), R(7,3), R(8,3), R(6,4), R(8,4), R(6,5), R(7,5), and R(8,5) have received light with an intensity of not less than a predetermined value (i.e., reflected light), and sets the number of the light-receiving elements that have received the reflected light to seven.

CPU 60 determines that at least one of objects A to C has been selected by the user, based on positions of the light-receiving elements that have received the reflected light (specifically, positions of the light-receiving elements in the x direction in sensor array 30). Further, CPU 60 identifies one object associated with the numerical value range including the calculated number of the light-receiving elements, from among the plurality of objects A to C, based on the calculated number of the light-receiving elements and numerical value range data 71. For example, when the relation of Th3≥7>Th4 or Th3>7≥Th4 is satisfied, CPU 60 identifies object B. In this case, reflective member 950 intersects with object B in display region 810.

Furthermore, CPU 60 performs processing corresponding to the identified object. For example, CPU 60 activates an application program, or opens a file.

On the other hand, when the reflected light is received by light-receiving elements R(i,j) of at least distance-measuring sensor 31_4 and distance-measuring sensor 31_5, CPU 60 similarly calculates the number of the light-receiving elements that have received the reflected light. Further, CPU 60 identifies one object associated with the numerical value range including the calculated number of the light-receiving elements, from among the plurality of objects D to F, based on the calculated number of the light-receiving elements and numerical value range data 71. Furthermore, CPU 60 performs processing corresponding to the identified object.

Thus, it can be said that display system 1 has a configuration described below, when attention is focused on, for example, objects A to C. CPU 60 in display system 1 causes the plurality of objects C, B, and A to be displayed in display region 810 in a manner arranged in a predetermined orientation (i.e., the positive orientation in the y direction). Light-emitting element E2 emits light to the plurality of objects A to C in the predetermined orientation. CPU 60 calculates the number of the light-receiving elements that have received the reflected light. Further, CPU 60 identifies one object associated with the numerical value range including the calculated number of the light-receiving elements, from among the plurality of objects A to C, based on the calculated number of the light-receiving elements and numerical value range data 71. Furthermore, CPU 60 performs processing corresponding to the identified object.

Therefore, in display system 1, selection of an object in a two-dimensional image displayed in midair can be detected with a simple configuration, without surrounding the periphery of the two-dimensional image with a frame.

Hereinafter, a description will be given assuming that, in the state of Fig. 5, object B has been selected by the user, and CPU 60 identifies object B from among the plurality of objects.

Next, a technique for improving accuracy of detecting reflective member 950 in display system 1 will be described.

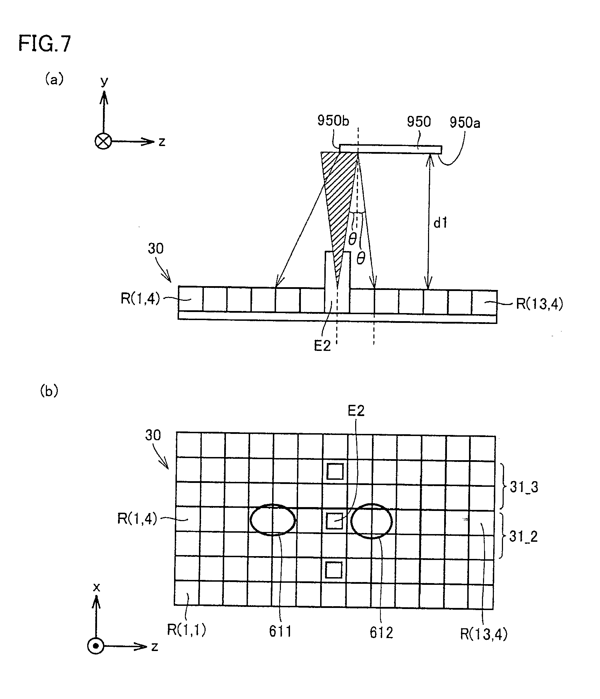

Fig. 7 is a view showing light-receiving regions in a state where reflective member 950 is located at a position where reflective member 950 can reflect only a portion of the light emitted by light-emitting element E2. Fig. 7(a) is a cross sectional view taken along line IVb-IVb in Fig. 4(a) and seen in the direction of arrows in a case where reflective member 950 is disposed in this state. Fig. 7(b) is a top view of sensor array 30 in the case where reflective member 950 is disposed in this state.

Referring to Fig.7(a) and Fig.7 (b), when reflective member 950 is located at a position where reflective member 950 can reflect only a portion of the light emitted by light-emitting element E2, the emitted light is also reflected by an end surface 950b of the body. Therefore, two light-receiving regions 611, 612 are formed on the light-receiving surface.

When the reflected light is received by light-receiving elements R(i,j) of at least distance-measuring sensor 31_2 and distance-measuring sensor 31_3, CPU 60 determines whether or not the number of the light-receiving regions formed by the reflected light is one. When CPU 60 determines that the number of the light-receiving regions is one, CPU 60 performs identification of an object, and performs the processing corresponding to the identified object. On the other hand, when CPU 60 determines that the number of the light-receiving regions is not one, CPU 60 does not perform identification of an object, that is, does not perform processing corresponding to an object.

For example, when one light-receiving region 601 is formed on the light-receiving surface as shown in Fig. 5(b), CPU 60 performs identification of an object, and performs the processing corresponding to the identified object. However, when light-receiving regions 611, 612 are formed on the light-receiving surface as shown in Fig. 7(b), CPU 60 does not perform identification of an object.

As described above, when reflective member 950 is located at a position where reflective member 950 cuts off infrared rays emitted from light-emitting element Ek in a halfway manner, display system 1 does not perform identification of an object. Thus, display system 1 does not perform processing corresponding to an object, unless the user presses reflective member 950 or finger 910 in a negative orientation in the z direction to a certain degree. Therefore, the accuracy of detecting reflective member 950 can be improved in display system 1.

It is noted that display system 1 may be configured such that, when CPU 60 determines that the number of the light-receiving regions is two or more, CPU 60 tentatively performs identification of an object, and then does not perform the identified object.

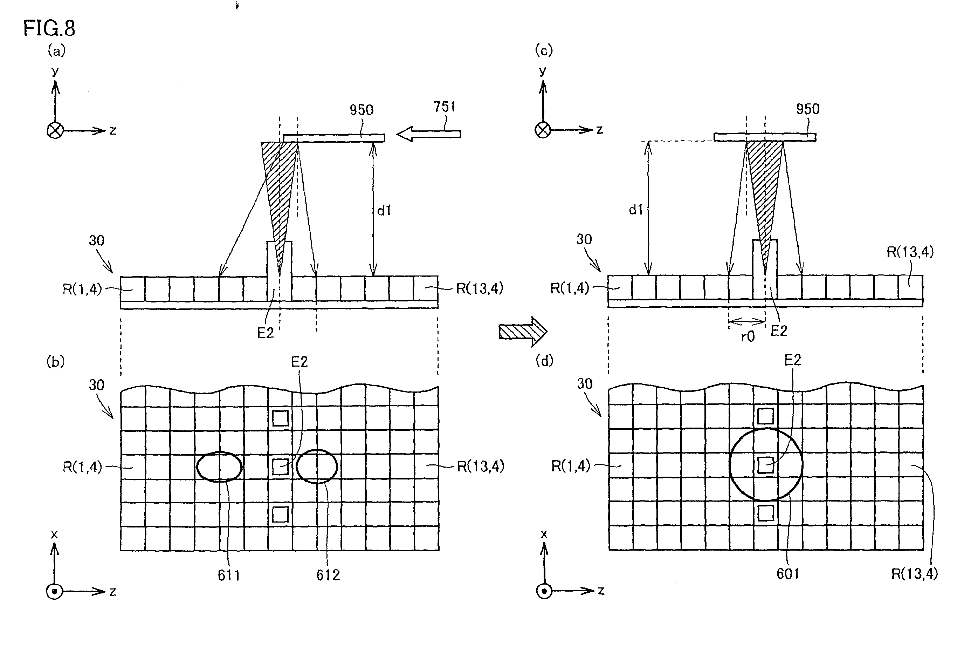

Next, a technique for determined whether or not a user operation has been fixed will be described, with reference to Figs. 8 to 10.

Fig. 8 is a view showing a first example in which it is determined that a user operation has been fixed. Fig. 8(a) and Fig. 8(b) are views showing a state where reflective member 950 is located at the same position as that in Fig. 7(a) and Fig. 7(b). Fig. 8(c) is a cross sectional view of sensor array 30 in a state where reflective member 950 is moved from the state shown in Fig. 8(a) over a certain distance in a direction indicated by an arrow 751 (i.e., the negative orientation in the z direction). More specifically, Fig. 8(c) is a cross sectional view taken along line IVb-IVb in Fig. 4(a) and seen in the direction of arrows in the state where reflective member 950 is moved over the certain distance. Fig. 8(d) is a top view of sensor array 30 in this state. It is noted that Fig. 8(c) and Fig. 8(d) show the same state as that in Fig. 5(a) and Fig. 5(b).

Referring to Fig. 8, when CPU 60 determines that the number of the light-receiving regions formed on the light-receiving surface has been changed from two to one, CPU 60 determines that a user operation has been fixed, and performs identification of an object. Thus, since CPU 60 determines a change in the state of the light-receiving regions and thereby determines that a user operation has been fixed, CPU 60 can prevent a malfunction due to slight movement of the body (reflective member 950 or finger 910) and the like.

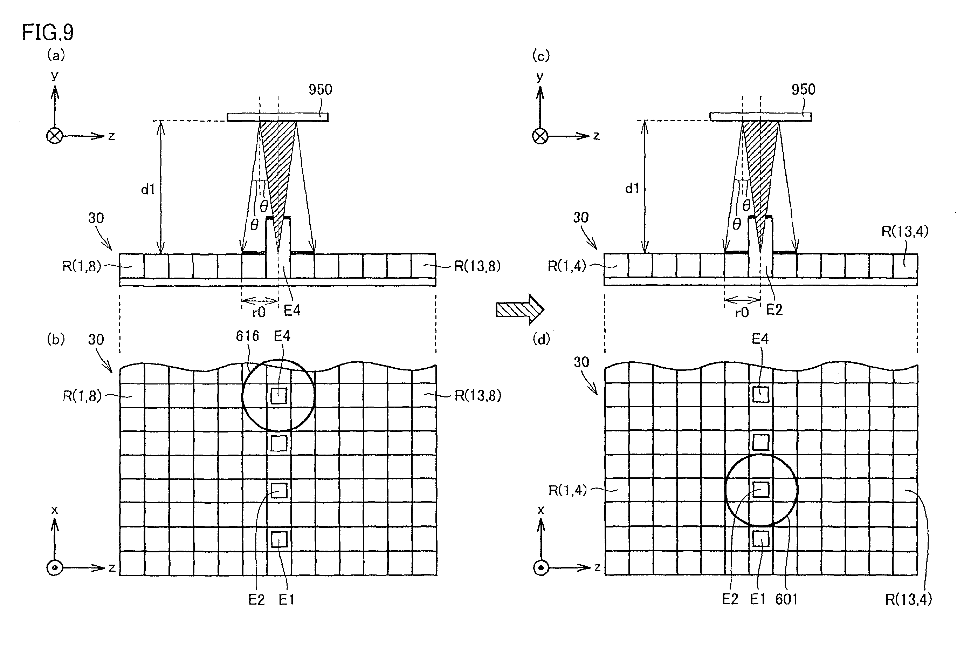

Fig. 9 is a view showing a second example in which it is determined that a user operation has been fixed. Fig. 9 is also a view showing an operation example in a case where the user performs a drag-and-drop operation for an object.

Fig. 9(a) and Fig. 9(b) are views showing a state where object E (see Fig. 1) has been selected by the user. Fig. 9(a) is a cross sectional view taken along a line IXa-IXa in Fig. 4(a) and seen in the direction of arrows in the state where object E has been selected. Fig. 9(b) is a top view of sensor array 30 in this state. Fig. 9(c) is a cross sectional view of sensor array 30 in a state where reflective member 950 is moved from the state shown in Fig. 9(a) in a negative orientation in the x direction. More specifically, Fig. 9(c) is a cross sectional view taken along line IVb-IVb in Fig. 4(a) and seen in the direction of arrows in this state. Fig. 9(d) is a top view of sensor array 30 in this state. It is noted that Fig. 9(c) and Fig. 9(d) show the same state as that in Fig. 5(a) and Fig. 5(b).

Referring to Fig. 9, when CPU 60 determines that the light-receiving region formed on the light-receiving surface has transitioned from one light-receiving region 616 to one light-receiving region 601, CPU 60 determines that a command to drag and drop object E on object B has been input. More specifically, when the state of light-receiving region 601 is maintained for a predetermined time, CPU 60 determines that an operation to drag and drop object E on object B has been performed.

Thus, since CPU 60 determines a change in the state of the light-receiving region and thereby determines that a user operation has been fixed, CPU 60 can prevent a malfunction due to slight movement of the body (reflective member 950 or finger 910) and the like.

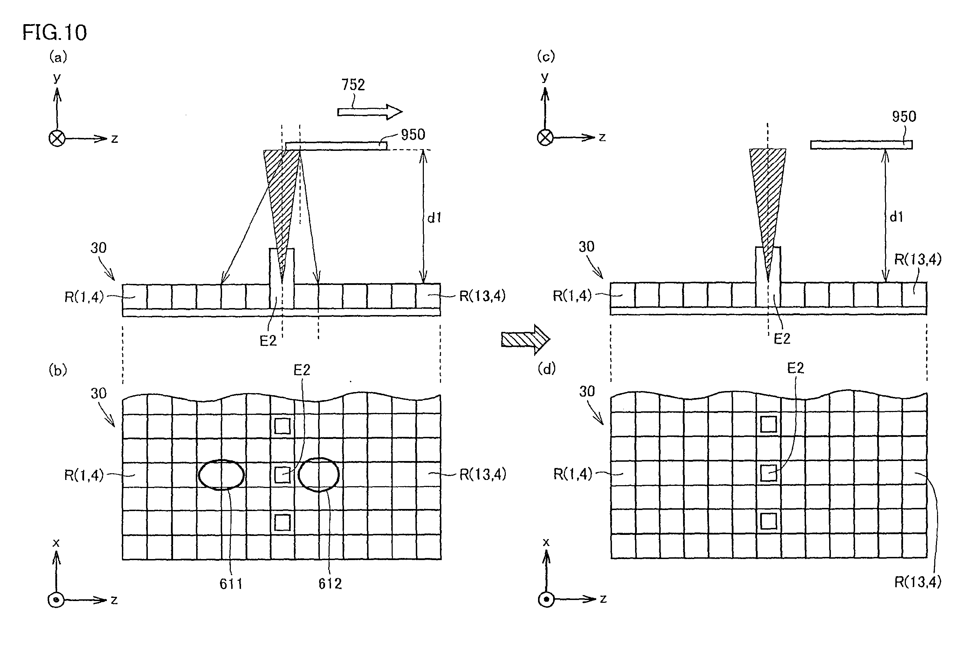

Fig. 10 is a view showing an example in which it is determined that a user operation has not been fixed. Fig. 10(a) and Fig. 10(b) are views showing a state where reflective member 950 is located at the same position as that in Fig. 8(a) and Fig. 8(b). Fig. 10(c) is a cross sectional view of sensor array 30 in a state where reflective member 950 is moved from the state shown in Fig. 10(a) over a certain distance in a direction indicated by an arrow 752 (i.e., a positive orientation in the z direction). More specifically, Fig. 10(c) is a cross sectional view taken along line IVb-IVb in Fig. 4(a) and seen in the direction of arrows in the state where reflective member 950 is moved over the certain distance. Fig. 10(d) is a top view of sensor array 30 in this state.

Referring to Fig. 10, when CPU 60 determines that the number of the light-receiving regions formed on the light-receiving surface has been changed from two to zero, CPU 60 determines that a user operation has not been fixed. That is, CPU 60 determines that selection of object B has not been performed by the user.

### <When Body is not Parallel to Light-Receiving Surface>

The above description has been given of the exemplary case where bottom surface 950a of reflective member 950 is parallel to an xz plane. However, reflective member 950 or finger 910 may not be parallel to the xz plane when display system 1 is used. Processing in display system 1 in such a case will be described below.

Hereinafter, a description will be given below assuming that bottom surface 950a of reflective member 950 is inclined relative to the xz plane while maintaining parallel to the x axis. More specifically, a description will be given assuming that light emitted by light-emitting element Ek and reflected by a body is received by at least one of 13 light-receiving elements R(1,2k) to R(13,2k), or not received by any of all light-receiving elements R(i,j) included in sensor array 30.

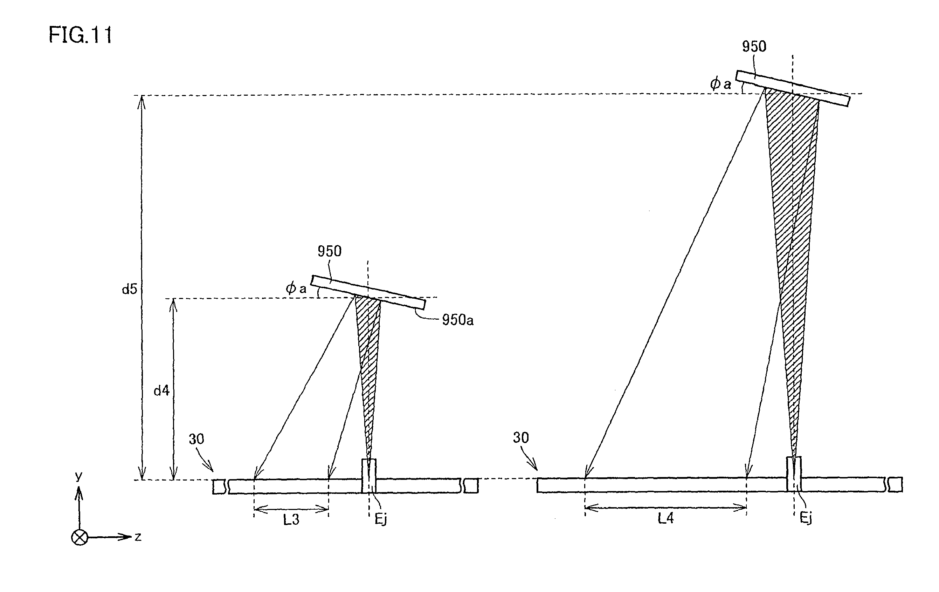

Fig. 11 is a view for illustrating a light-receiving region formed when reflective member 950 is inclined at an angle of φa. Referring to Fig. 11, when the distance between reflective member 950 and the light-receiving surface is d4, a light-receiving region in the shape of an ellipse with a long axis having a length of L3 is formed on the light-receiving surface. When the distance between reflective member 950 and the light-receiving surface is d5 (d5>d4), a light-receiving region in the shape of an ellipse with a long axis having a length of L4 (L4>L3) is formed on the light-receiving surface. For example, when d5=2xd4, it results in L4=2xL3.

Thus, the light-receiving region has an area increased with an increase in the distance between reflective member 950 and the light-receiving surface. That is, the number of light-receiving elements R(i,j) receiving the reflected light is increased with such an increase.

Therefore, even when reflective member 950 is inclined, CPU 60 can determine one object from among the plurality of objects based on the number of the light-receiving elements that have received the reflected light.

The greater the value of angle φa, the greater the value of L3 or L4. Preferably, in such a case, display system 1 determines that selection of an object by the user has not been performed appropriately. Thus, CPU 60 performs processing described below.

It is noted that it is assumed that memory 70 further prestores data which associates numerical values different from each other with the plurality of objects, respectively. In addition, the numerical values are set to increase in proportion to a distance between an object and the light-receiving surface. Hereinafter, it is assumed that, for example, a numerical value N1 is associated with objects A, D, and G, a numerical value N2 is associated with objects B, E, and H, and a numerical value N3 is associated with objects C, F, and I.

Numerical value N1, N2, or N3 is the number based on a diameter of a circle formed on the light-receiving surface when reflective member 950 is parallel to the light-receiving surface as shown in Fig. 5. For example, numerical value N1 is the number equivalent to a diameter of light-receiving region 601 in Fig. 5(b). More specifically, since the reflected light reaches light-receiving elements R(6,4) and R(8,4) and light-emitting element E2, the value "3" for the three elements is defined as numerical value N1. Numerical values N2 and N3 are set similarly.

CPU 60 compares the number of the light-receiving elements located on the long axis (axis in the z direction) of the light-receiving region (ellipse), of the light-receiving elements that have received the reflected light, with the numerical value associated with the identified object. When the number of the light-receiving elements is less than a predetermined multiple of the numerical value, CPU 60 performs the processing corresponding to the identified object. On the other hand, when the number of the light-receiving elements is not less than the predetermined multiple of the numerical value, CPU 60 does not perform the processing corresponding to the identified object. It is noted that data indicating the predetermined multiple is also prestored in memory 70.

A description will be given below based on a specific example. When the user selects object B and CPU 60 identifies object B from among the plurality of objects, CPU 60 compares the number of the light-receiving elements located on the long axis of the light-receiving region, of the light-receiving elements that have received the reflected light, with numerical value N2 associated with identified object B.

When the number of the light-receiving elements is less than a predetermined multiple of numerical value N2 (for example, 1.6 times numerical value N2), CPU 60 performs the processing corresponding to the identified object. On the other hand, when the number of the light-receiving elements is not less than the predetermined multiple of the numerical value, CPU 60 does not perform the processing corresponding to the identified object.

Since display system 1 has such a configuration, display system 1 can determine that, when reflective member 950 or finger 910 has a large inclination, selection of an object by the user has not been performed appropriately. Thus, display system 1 is excellent in operability for the user.

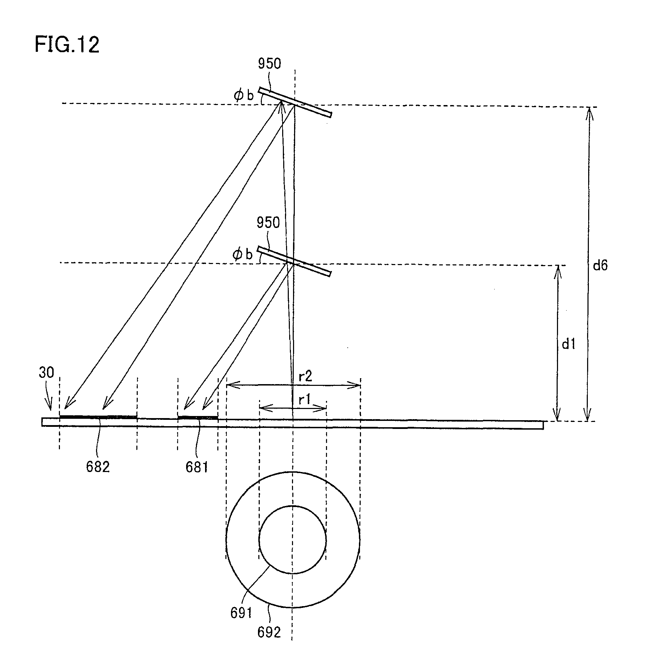

Fig. 12 is a view for illustrating a light-receiving region formed when reflective member 950 is inclined at an angle of φb. Angle φb is an angle at which the number of the light-receiving elements that have received the reflected light is not less than the predetermined multiple of the numerical value.

It is noted that it is assumed hereinafter that, when bottom surface 950a of reflective member 950 is parallel to the light-receiving surface and the distance between bottom surface 950a and the light-receiving surface is d6, object A has been selected by the user. In this state, CPU 60 identifies object A from among the plurality of objects.

Referring to Fig. 12, when the distance between reflective member 950 and the light-receiving surface is d1, a region within a region 691 is a light-receiving region in which selection of object B is determined as valid. That is, as long as a light-receiving region is formed within region 691, the number of the light-receiving elements that have received the reflected light is less than a predetermined multiple of numerical value N2. When a light-receiving region 681 is formed on the light-receiving surface, CPU 60 determines that object B has not been selected correctly, and changes a display mode for object B from a normal display mode to a display mode different from the normal display mode. For example, CPU 60 causes object B to be displayed in display region 810 in a blinking manner.

When the distance between reflective member 950 and the light-receiving surface is d6, a region within a region 692 is a light-receiving region in which selection of object A is determined as valid. That is, as long as a light-receiving region is formed within region 692, the number of the light-receiving elements that have received the reflected light is less than a predetermined multiple of numerical value N1. When a light-receiving region 682 is formed on the light-receiving surface, CPU 60 determines that object A has not been selected correctly, and changes a display mode for object A from a normal display mode to a display mode different from the normal display mode.

By changing the display mode for the object as described above, display system 1 can urge the user to fine-tune the position of reflective member 950 or finger 910.

Next, cases where it is determined that an object has been selected correctly (i.e., determined as valid) and where it is determined that an object has not been selected correctly (i.e., determined as invalid) will be described based on specific examples. It is noted that, hereinafter, a description will be given assuming that the "predetermined multiple" is 1.6 times.

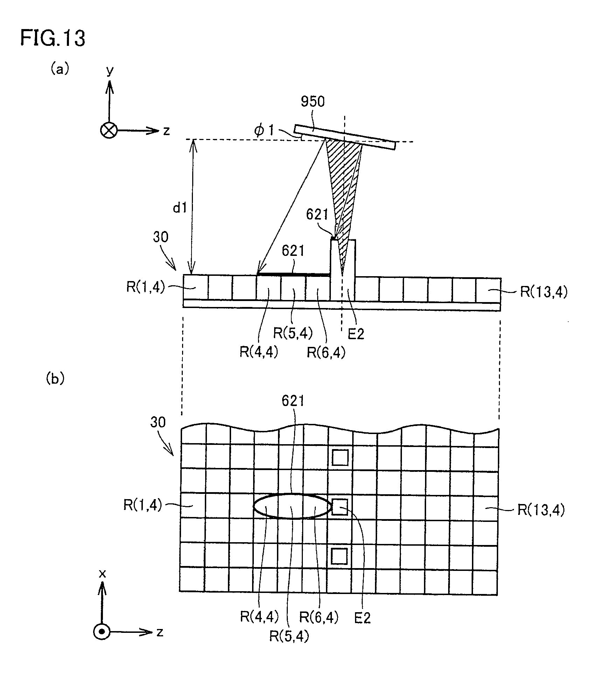

Fig. 13 is a view showing an example in which selection of object B is determined as valid by CPU 60. More specifically, Fig. 13 is a view for illustrating a light-receiving region formed when reflective member 950 is inclined at an angle of φ1. Fig. 13(a) is a cross sectional view taken along line IVb-IVb in Fig. 4 and seen in the direction of arrows when reflective member 950 is inclined at an angle of φ1. Fig. 13(b) is a top view of sensor array 30 when reflective member 950 is inclined at an angle of φ1.

Referring to Fig. 13(a) and Fig. 13(b), at least three light-receiving elements R(4,4), R(5,4), and R(6,4) receive light reflected by reflective member 950. In this case, CPU 60 determines that the number "3" of the light-receiving elements that have received the reflected light is less than 1.6 times numerical value N2 (N2=3), and performs the processing corresponding to the identified object.

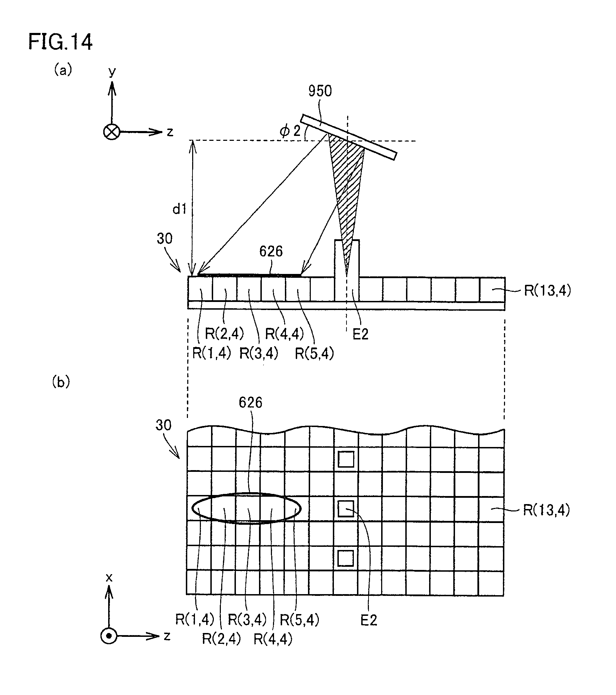

Fig. 14 is a view showing an example in which selection of object B is determined as invalid by CPU 60. More specifically, Fig. 14 is a view for illustrating a light-receiving region formed when reflective member 950 is inclined at an angle of φ2 (φ2>φ1). Fig. 14(a) is a cross sectional view taken along line IVb-IVb in Fig. 4 and seen in the direction of arrows when reflective member 950 is inclined at an angle of φ2. Fig. 14(b) is a top view of sensor array 30 when reflective member 950 is inclined at an angle of φ2.

Referring to Fig. 14(a) and Fig. 14(b), at least five light-receiving elements R(1,4), R(2,4), R(3,4), R(4,4), and R(5,4) receive light reflected by reflective member 950. In this case, CPU 60 determines that the number "5" of the light-receiving elements that have received the reflected light is not less than 1.6 times numerical value N2 (N2=3), and does not perform the processing corresponding to the identified object.

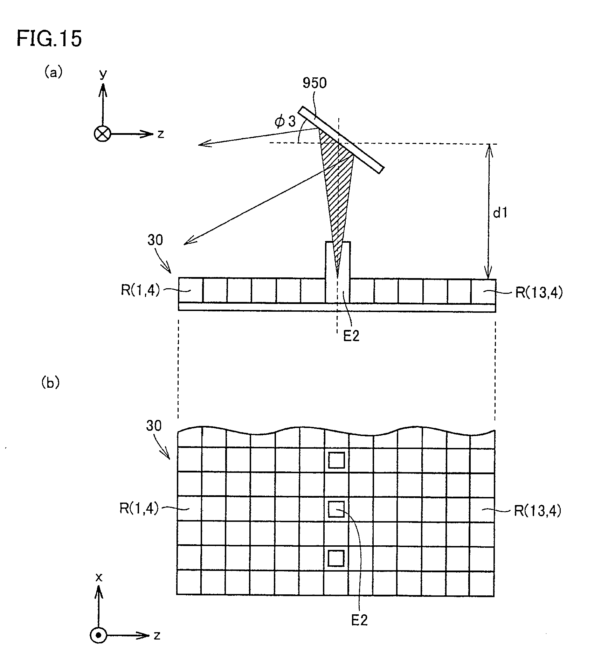

Fig. 15 is a view showing an example in which selection of object B is determined as invalid by CPU 60. More specifically, Fig. 15 is a view for illustrating a light-receiving region formed when reflective member 950 is inclined at an angle of φ3 (90°>φ3>φ2). Fig. 15(a) is a cross sectional view taken along line IVb-IVb in Fig. 4 and seen in the direction of arrows when reflective member 950 is inclined at an angle of φ3. Fig. 15(b) is a top view of sensor array 30 when reflective member 950 is inclined at an angle of φ3.

Referring to Fig. 15(a) and Fig. 15(b), no reflected light is emitted on the light-receiving surface. Therefore, in this case, CPU 60 does not perform identification of an object as described above.

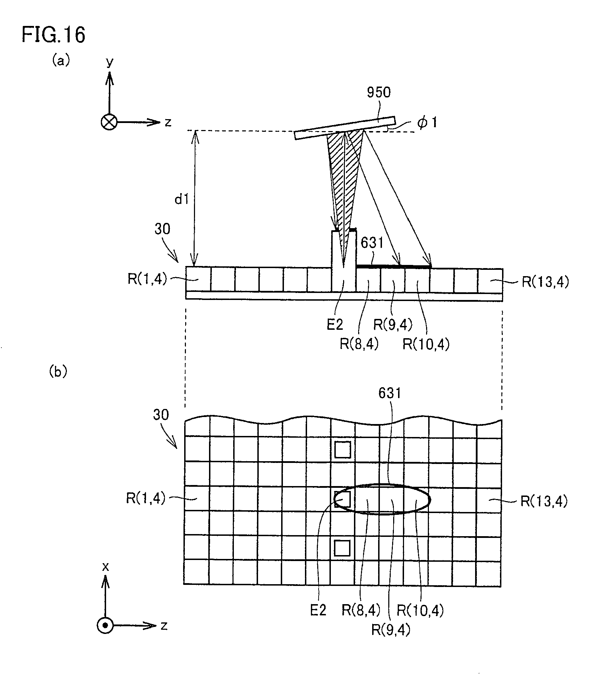

Fig. 16 is a view showing an example in which selection of object B is determined as valid by CPU 60. More specifically, Fig. 16 is a view for illustrating a light-receiving region formed when reflective member 950 is inclined at an angle of φ1 in a direction opposite to that in Fig. 13. Fig. 16(a) is a cross sectional view taken along line IVb-IVb in Fig. 4 and seen in the direction of arrows when reflective member 950 is inclined at an angle of φ1. Fig. 16(b) is a top view of sensor array 30 when reflective member 950 is inclined at an angle of φ1.

Referring to Fig. 16(a) and Fig. 16(b), at least three light-receiving elements R(8,4), R(9,4), and R(10,4) receive light reflected by reflective member 950. In this case, CPU 60 determines that the number "3" of the light-receiving elements that have received the reflected light is less than 1.6 times numerical value N2 (N2=3), and performs the processing corresponding to the identified object.

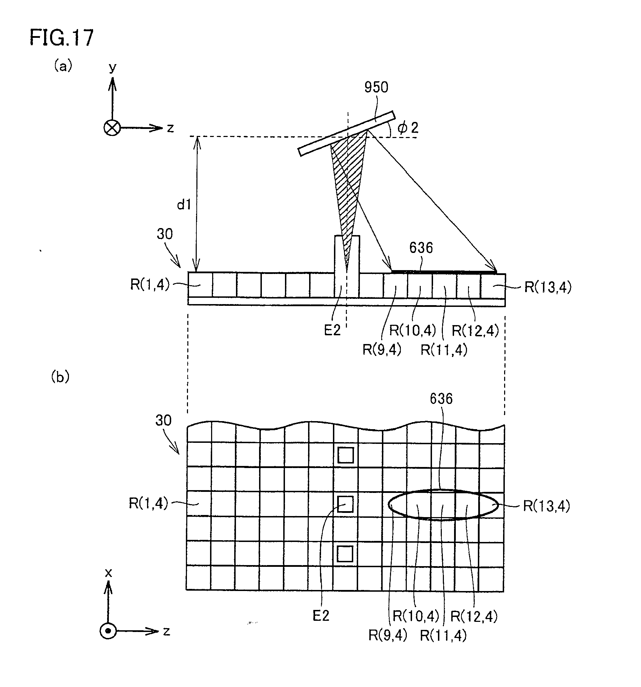

Fig. 17 is a view showing an example in which selection of object B is determined as invalid by CPU 60. More specifically, Fig. 17 is a view for illustrating a light-receiving region formed when reflective member 950 is inclined at an angle of φ2 in a direction opposite to that in Fig. 14. Fig. 17(a) is a cross sectional view taken along line IVb-IVb in Fig. 4 and seen in the direction of arrows when reflective member 950 is inclined at an angle of φ2. Fig. 17(b) is a top view of sensor array 30 when reflective member 950 is inclined at an angle of φ2.

Referring to Fig. 17(a) and Fig. 17(b), at least five light-receiving elements R(9,4), R(10,4), R(11,4), R(12,4), and R(13,4) receive light reflected by reflective member 950. In this case, CPU 60 determines that the number "5" of the light-receiving elements that have received the reflected light is not less than 1.6 times numerical value N2 (N2=3), and does not perform the processing corresponding to the identified object.

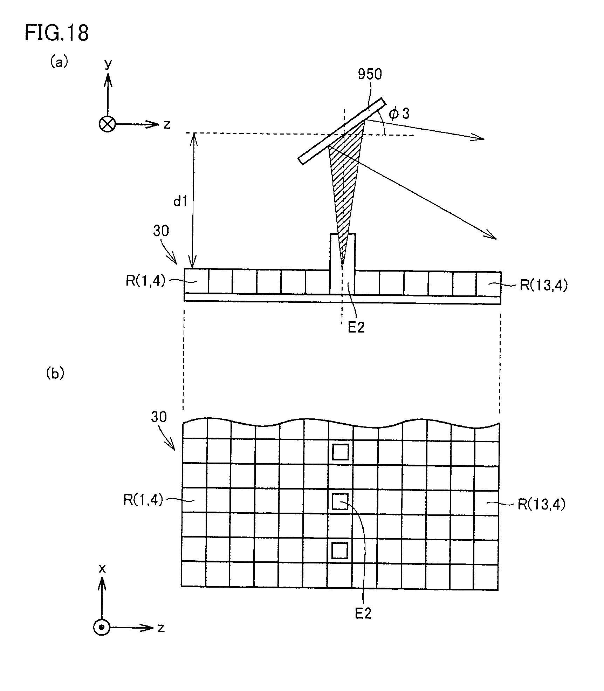

Fig. 18 is a view showing an example in which selection of object B is determined as invalid by CPU 60. More specifically, Fig. 18 is a view for illustrating a light-receiving region formed when reflective member 950 is inclined at an angle of φ3 in a direction opposite to that in Fig. 15. Fig. 18(a) is a cross sectional view taken along line IVb-IVb in Fig. 4 and seen in the direction of arrows when reflective member 950 is inclined at an angle of φ3. Fig. 18(b) is a top view of sensor array 30 when reflective member 950 is inclined at an angle of φ3.

Referring to Fig. 18(a) and Fig. 18(b), no reflected light is emitted on the light-receiving surface. Therefore, in this case, CPU 60 does not perform identification of an object as described above.

### <Control Structure>

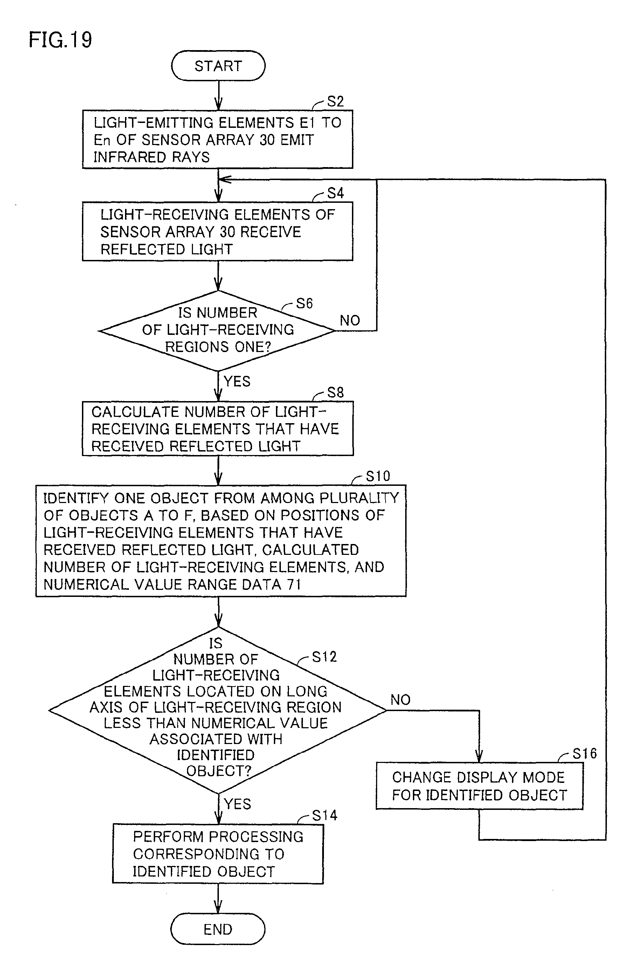

Fig. 19 is a flowchart showing a flow of processing in display system 1. Referring to Fig. 19, in step S2, light-emitting elements E1 to En of sensor array 30 emit infrared rays. In step S4, some of the plurality of light-receiving elements R included in sensor array 30 receive reflected light.

In step S6, CPU 60 determines whether or not the number of light-receiving regions is one, based on an output from sensor array 30. When CPU 60 determines that the number of the light-receiving regions is one (YES in step S6), CPU 60 calculates the number of the light-receiving elements that have received the reflected light in step S8. When CPU 60 determines that the number of the light-receiving regions is not one (NO in step S6), CPU 60 advances the processing to step S4.

In step S10, CPU 60 identifies one object from among the plurality of objects A to I, based on positions of the light-receiving elements that have received the reflected light, the calculated number of the light-receiving elements, and numerical value range data 71.

In step S 12, CPU 60 determines whether or not the number of the light-receiving elements located on the long axis of the light-receiving region, of the light-receiving elements that have received the reflected light, is less than a predetermined multiple (1.6 times) of the numerical value associated with the identified object. When CPU 60 determines that the number is less than the predetermined multiple (YES in step S12), CPU 60 performs the processing corresponding to the identified object in step S14. When CPU 60 determines that the number is not less than the predetermined multiple (NO in step S12), CPU 60 changes a display mode for the identified object from a normal display mode to a display mode different from the normal display mode in step S16.

### <Use of Output Voltage>

Sensor array 30 includes the plurality of distance-measuring sensors 31_1 to 31_n (see Fig. 4). Hereinafter, a description will be given of a configuration of display system 1 that performs detection with higher accuracy by using analog distance-measuring sensors as distance-measuring sensors 31_1 to 31_n.

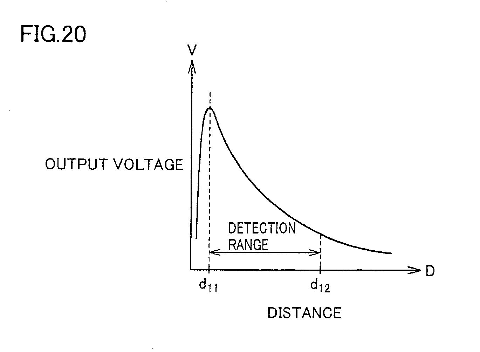

Fig. 20 is a view showing characteristics of distance-measuring sensors 31_1 to 31_n. Referring to Fig. 20, distance-measuring sensors 31_1 to 31_n have characteristics that, when a distance D is greater than a distance d11, their output voltage is decreased with an increase in a distance to the body (reflective member 950, finger 910).

It is noted that the distance that can be detected by distance-measuring sensors 31 ranges from distance d11 to a distance d12, in which the output voltage does not drop below a certain value. Sensor array 30 includes distance-measuring sensors 31_1 to 31_n having a detectable distance range in which display region 810 is included. In addition, data indicating the characteristics shown in Fig. 20 is prestored in memory 70.

CPU 60 detects the position of the body based on voltage values output by the distance-measuring sensors and the data indicating the characteristics shown in Fig. 20. CPU 60 determines whether or not the identification of the identified object is correct based on the detected position of the body and data indicating display positions of the objects stored in memory 70. When CPU 60 determines that the identification is correct, CPU 60 performs the processing corresponding to the identified object.

As described above, display system 1 can perform detection with higher accuracy by also using the voltage values output by distance-measuring sensors 31_1 to 31_n.

### <Variation of Sensor Array 30>

In the above description, sensor array 30 having the configuration shown in Fig. 4 has been used as a detection element. However, the detection element capable of being used for display system 1 is not limited to sensor array 30.

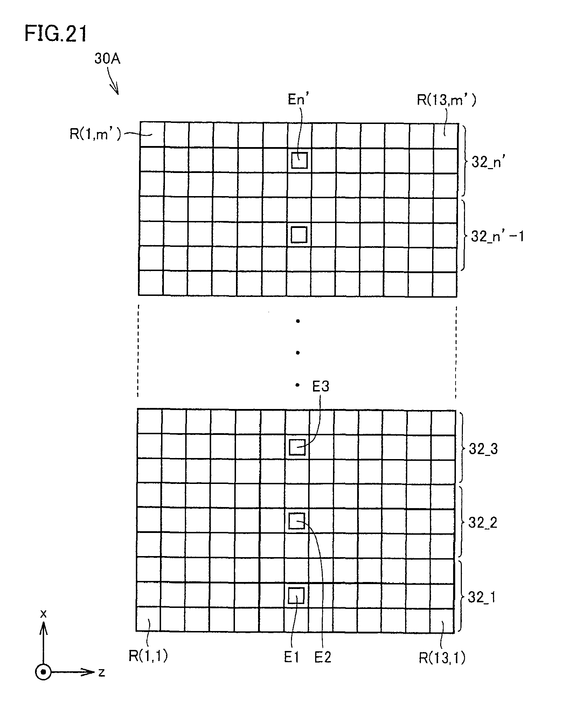

Fig. 21 is a top view of another sensor array 30A capable of being used for display system 1. Referring to Fig. 21, sensor array 30A includes a plurality of distance-measuring sensors 32_1 to 32_n', where n' is a natural number equal to or greater than 2. The plurality of distance-measuring sensors each have the same configuration. Each distance-measuring sensor includes one light-emitting element and a plurality of light-receiving elements. For example, distance-measuring sensor 32_1 includes one light-emitting element E1 and 38 light-receiving elements R(1,1) to R(13,1), R(1,2) to R(6,2), R(8,2) to R(13,2), and R(1,3) to R(13,3).

Light-emitting element Ek emits light. Light-receiving elements R(i,j) are disposed to be capable of receiving light reflected by a body (for example, finger 910), of the light emitted by light-emitting element Ek, where i is a natural number from 1 to 13 inclusive, j is a natural number from 1 to m' inclusive, and m' and n' satisfy the relation of m'=2xn'.

When attention is focused on one distance-measuring sensor 31_k, the plurality of light-receiving elements R(i,j) included in the sensor are disposed adjacent to each other to surround light-emitting element Ek included in the sensor. Further, sensor array 30A is configured such that the light emitted by light-emitting element Ek is not incident on light-receiving elements R(i,j). Using sensor array 30A instead of sensor array 30, display system 1 can also perform processing similar to that with sensor array 30.

The interval between light-emitting elements Ek can be set as appropriate based on the interval between the plurality of objects to be displayed in the x direction. Alternatively, display system 1 can be configured to display the objects in accordance with the interval between light-emitting elements Ek.

Further, when display system 1 displays the objects in display region 810 only in a row in the y direction, a detection element having only one light-emitting element can be used instead of sensor array 30.

Fig. 22 is a view showing one example of a detection element (sensor) having only one light-emitting element. More specifically, Fig. 22 is a top view of a distance-measuring sensor 33 as a detection element. Referring to Fig. 22, the sensor has a rectangular light-receiving surface. Distance-measuring sensor 33 includes light-emitting element E1 and 168 light-receiving elements (i,j) disposed to surround light-emitting element E1. When distance-measuring sensor 33 is used, an object can be identified even when bottom surface 950a of reflective member 950 is inclined relative to the xz plane while maintaining parallel to the z axis.

Further, it is also possible to use a sensor array combining distance-measuring sensors 33, as a detection element.

### <Variation of Control Structure>

(1) The processing in step S6 and the processing in step S8 shown in Fig. 19 may be performed in an opposite order. That is, display system 1 may be configured such that CPU 60 calculates the number of the light-receiving elements that have received the reflected light, and thereafter determines whether or not the number of the light-emitted regions is one.
(2) The processing in step S 12 shown in Fig. 19 may be replaced by the following processing. Specifically, display system 1 is configured such that CPU 60 determines whether or not the light-receiving region is included in a predetermined region in step S12. In this case, display system 1 can be configured such that, when CPU 60 determines that the light-receiving region is included in the predetermined region, the processing advances to step S 14, and when CPU 60 determines that the light-receiving region is not included in the predetermined region, the processing advances to step S16.

The predetermined region can be set for each object. Further, the predetermined region can be set to increase in proportion to a distance between an object and the sensor array. The predetermined region can be, for example, a circular region about light-emitting element Ek.

### <Additional Remark>

It is only necessary for display system 1 to be configured such that, when attention is focused on, for example, objects A to C, a light-emitting element emits light in the predetermined orientation such that the light travels to the plurality of objects A to C, or travels along the plurality of objects A to C through a region extending from the plurality of objects A to C in the direction of the normal of display region 810 by a predetermined distance.

It should be understood that the embodiments disclosed herein are illustrative and not limited to only the above description. The scope of the present invention is defined by the scope of the claims, and is intended to include any modifications within the scope and meaning equivalent to the scope of the claims.

### REFERENCE SIGNS LIST

1: display system; 10: casing; 20: opening; 30, 30A: sensor array. E1, E2, E4, Ek, En: light-emitting element; 31, 32, 33: distance-measuring sensor; 40: optical element; 50: display; 60: CPU; 70: memory; 601, 605, 606, 611, 612, 616, 681, 682: light-receiving region; 810: display region; 910: finger; 950: reflective member; 950a: bottom surface; 950b: end surface.

## Claims

1. A display system (1), comprising:
a display (50);
an optical element (40) displaying a two-dimensional image in a midair display region (810) based on an image displayed on said display;
a sensor (30) including a light-emitting element and a plurality of light-receiving elements;
a processor (60) electrically connected to said sensor and causing a plurality of objects to be displayed in said display region in a manner arranged in a predetermined orientation; and
a memory (70) electrically connected to said processor,
wherein said light-emitting element emits light to said plurality of objects in said predetermined orientation,
said plurality of light-receiving elements are disposed to be capable of receiving light reflected by a body, of said emitted light,
said memory prestores first data which associates numerical value ranges different from each other with said plurality of objects, respectively, and
said processor is configured to:
calculate, when said reflected light is received by said sensor, the number of the light-receiving elements that have received said reflected light;
identify one said object associated with said numerical value range including said calculated number of the light-receiving elements, from among said plurality of objects, based on said calculated number of the light-receiving elements and said first data; and
perform processing corresponding to said identified object.

2. The display system according to claim 1, wherein
said plurality of light-receiving elements are disposed adjacent to said light-emitting element, and
said processor determines whether or not the number of light-receiving regions in said sensor formed by said reflected light is one, based on reception of the reflected light by said sensor,
performs identification of said object when said processor determines that the number of said light-receiving regions is one, and
does not perform identification of said object when said processor determines that the number of said light-receiving regions is not one.

3. The display system according to claim 2, wherein:
said plurality of light-receiving elements are disposed to surround said light-emitting element.

4. The display system according to claim 2 or 3, wherein:
said plurality of light-receiving elements are disposed in a matrix;
said light-receiving region has a shape of a circle or an ellipse;
said memory further stores second data which associates numerical values different from each other with said plurality of objects, respectively;
said numerical values are set to increase in proportion to a distance between said object and said sensor; and
said processor is configured to:
compare, when said light-receiving region has the shape of an ellipse, the number of the light-receiving elements located on a long axis of the ellipse, of the light-receiving elements that have received said reflected light, with said numerical value associated with said identified object; and
perform the processing corresponding to said identified object when said number of the light-receiving elements is less than a predetermined multiple of said numerical value; and
said processor is configured not to perform the processing corresponding to said identified object when said number of the light-receiving elements is not less than the predetermined multiple of said numerical value.

5. The display system according to claim 4, wherein, when said processor determines that said number of the light-receiving elements located on the long axis is not less than the predetermined multiple of said numerical value, said processor changes a display mode for said identified object from a first display mode to a second display mode.

6. The display system according to claim 2 or 3, wherein:
when said processor determines that the number of said light-receiving regions is one, said processor determines whether or not said light-receiving region is included in a predetermined region;
when said processor determines that said light-receiving region is included in said predetermined region, said processor performs the processing corresponding to said identified object; and
when said processor determines that said light-receiving region is not included in said predetermined region, said processor does not perform the processing corresponding to said identified object.

7. The display system according to claim 6, wherein:
said predetermined region is set for each said object; and
said predetermined region is set to increase in proportion to a distance between said object and said sensor.

8. The display system according to claim 7, wherein, when said processor determines that said light-receiving region is not included in said predetermined region, said processor changes a display mode for said identified object from a first display mode to a second display mode.

9. The display system according to any of claims 1 to 8, wherein:
said sensor is a distance-measuring sensor;
said memory further stores third data indicating correspondence relation between an output voltage and a distance in said sensor, and fourth data indicating respective display positions of said plurality of objects; and
said processor is configured to:
detect a position of said body based on a voltage value output by said distance-measuring sensor and said third data;
determine whether or not the identification of said identified object is correct based on said detected position of said body and said fourth data; and
perform the processing corresponding to said identified object when said processor determines that said identification is correct.

10. A detection method in a display system (1) detecting selection of an object included in a two-dimensional image displayed in a midair display region (810),
said display system including a display (50), an optical element (40) displaying said two-dimensional image based on an image displayed on said display, a sensor (30) including a light-emitting element and a plurality of light-receiving elements, a processor (60) electrically connected to said sensor and causing a plurality of objects to be displayed on said display in a manner arranged in a predetermined orientation, and a memory (70) electrically connected to said processor, said memory prestoring data which associates numerical value ranges different from each other with said plurality of objects, respectively,
said detection method comprising the steps of:
said light-emitting element emitting light to said plurality of objects in said predetermined orientation (S2);
at least one of said plurality of light-receiving elements receiving light reflected by a body, of said emitted light (S4);
said processor calculating, when said reflected light is received by said sensor, the number of the light-receiving elements that have received said reflected light (S8);
said processor identifying one said object associated with said numerical value range including said calculated number of the light-receiving elements, from among said plurality of objects (S10); and
said processor performing processing corresponding to said identified object (S 14).
